(19) **Europäisches Patentamt**
**European Patent Office**
**Office européen des brevets**

(11) **EP 2 109 546 B1**

(12) **FASCICULE DE BREVET EUROPEEN**

(45) Date de publication et mention de la délivrance du brevet:
**01.09.2010 Bulletin 2010/35**

(21) Numéro de dépôt: **08761914.4**

(22) Date de dépôt: **09.01.2008**

(51) Int Cl.:
**B60G 21/055** (2006.01)

(86) Numéro de dépôt international:
**PCT/FR2008/050040**

(87) Numéro de publication internationale:
**WO 2008/099101 (21.08.2008 Gazette 2008/34)**

(54) **SYSTEME ET PROCEDE DE COMMANDE D'UN DISPOSITIF ANTI-ROULIS POUR VEHICULE AUTOMOBILE**

SYSTEM UND VERFAHREN ZUR STABILISATORSTEUERUNG FÜR EIN KRAFTFAHRZEUG

SYSTEM AND METHOD FOR CONTROLLING AN ANTI-ROLL DEVICE FOR A MOTOR VEHICLE

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **26.01.2007 FR 0752909**

(43) Date de publication de la demande:
**21.10.2009 Bulletin 2009/43**

(73) Titulaire: **Renault SAS**
**92100 Boulogne Billancourt (FR)**

(72) Inventeurs:
• **AGAPIOS, Maria**
**F-75011 Paris (FR)**
• **LEROY, Philippe**
**F-91940 Les Ulis (FR)**
• **MONTI, Alessandro**
**F-92250 La Garenne Colombes (FR)**
• **PLICHET, Roger**
**F-27340 Pont De L'arche (FR)**
• **POTHIN, Richard**
**F-78760 Jouars-pontchartrain (FR)**

(56) Documents cités:
**EP-B- 0 234 808** **WO-A-2005/120190**
**FR-A- 2 623 754** **FR-A- 2 697 474**
**US-A- 4 206 935** **US-A1- 2005 143 891**
**US-B2- 7 121 559**

**Description**

La présente invention porte sur un système et un procédé de commande anti-roulis pour véhicule automobile.

De façon classique, les véhicules automobiles sont pourvus d'un châssis, d'un habitacle, de roues reliées au châssis par un mécanisme de suspension avec des roues avant directrices commandées par un volant à la disposition du conducteur dans l'habitable du véhicule, et des roues arrières directrices ou non directrices.

En outre, la plupart des véhicules automobiles sont équipés d'un dispositif anti-roulis, et notamment d'un dispositif anti-roulis semi-actif, utilisant l'énergie du véhicule sans apport d'énergie supplémentaire. De tels dispositifs anti-roulis comprennent, par exemple, des barres anti-roulis ou barres anti-dévers, ou bien des suspensions pilotées.

Les documents GB2 377 415, WO03/008215 et EP 1 022 169 décrivent des dispositifs anti-roulis pour véhicule automobile commandés en fonction de la vitesse du véhicule et de la position angulaire du volant.

Les documents EP 1 541 394 et WO2005/120190 décrivent des systèmes de commande de dispositif anti-roulis pour véhicule automobile activant ou désactivant le dispositif d'anti-roulis en fonction de la vitesse du véhicule et de l'accélération latéral du véhicule.

Le Document US 5 630 623 décrit un système de commande d'un dispositif anti-roulis pour véhicule automobile activant ou désactivant le dispositif anti-roulis en fonction de la vitesse du véhicule, de l'accélération latérale du véhicule et de la position angulaire du volant.

De tels systèmes nécessitent de nombreux capteurs et procurent au véhicule un comportement insuffisamment stable lors de certaines sollicitations du conducteur sur certains états de chaussée. Certaines situations peuvent engendrer une perte de contrôle du véhicule, par exemple un évitement d'obstacle. Les pertes de contrôle dans ce cas sont souvent dues à une réponse inadaptée du véhicule car trop vive, pas assez amortie ou encore peu prévisible. EP 2344808B décrit un système selon le préambule de la revendication 1.

L'invention vise un système de commande d'un dispositif anti-roulis pour véhicule automobile assurant une sécurité, une sensation de sécurité, un confort et un plaisir de conduite améliorés tel que défini par la revendication 1.

Selon un premier aspect de l'invention, il est proposé un système de commande d'un dispositif anti-roulis pour véhicule automobile comprenant des moyens d'activation et désactivation du dispositif anti-roulis en fonction de paramètres de fonctionnement du véhicule comprenant la vitesse longitudinale du véhicule, l'accélération latérale du véhicule, la position angulaire du volant, et la vitesse angulaire de rotation du volant.

La prise en compte de la vitesse angulaire de rotation du volant permet d'anticiper l'évolution de la valeur de la position angulaire du volant ou, en d'autres termes, de construire un signal en avance de phase sur la position angulaire du volant.

Ainsi, la gestion de l'activation ou de la désactivation du dispositif d'anti-roulis est améliorée.

Lesdits paramètres de fonctionnement du véhicule comprennent, en outre, une estimation anticipée de la position angulaire du volant, à partir de la position angulaire présente du volant et de la vitesse angulaire de rotation présente du volant, élaborée par des moyens de calcul, à partir de la position angulaire du volant et de la vitesse angulaire de rotation du volant.

L'estimation anticipée de la position angulaire du volant permet d'anticiper une connexion du dispositif d'anti-roulis.

Dans un mode de réalisation, lesdits paramètres de fonctionnement du véhicule comprennent, en outre, la position de la pédale de freinage et/ou la position de la pédale d'accélération, et/ou la position de la pédale d'embrayage, et/ou le rapport de démultiplication engagé de la boîte de vitesses.

La prise en compte de ces paramètres supplémentaires permet d'améliorer la précision de la commande du dispositif d'anti-roulis.

Selon un mode de réalisation, le système comprend des moyens de mesure de l'accélération latérale du véhicule, et lesdits moyens d'activation et désactivation sont adaptés pour activer le dispositif anti-roulis lorsque l'accélération latérale mesurée du véhicule est supérieure à un seuil maximum d'accélération latérale mesurée.

Selon un mode de réalisation, le système comprend des moyens de calcul de l'accélération latérale du véhicule, et lesdits moyens d'activation et désactivation sont adaptés pour activer le dispositif anti-roulis lorsque l'accélération latérale calculée du véhicule est supérieure à un seuil maximum d'accélération latérale calculée.

Dans un mode de réalisation, lesdits moyens d'activation et désactivation sont adaptés pour activer le dispositif anti-roulis lorsque la vitesse longitudinale du véhicule est supérieure à un seuil de vitesse maximum.

Dans un mode de réalisation, lesdits moyens d'activation et désactivation sont adaptés pour activer le dispositif anti-roulis lorsqu'une situation d'urgence est détectée par des moyens de détection en fonction de paramètres de fonctionnement du véhicule comprenant la vitesse angulaire de rotation du volant et/ou la pression exercée sur la pédale de freinage et/ou la pression exercée sur la pédale d'accélération, et/ou le rapport de démultiplication engagé de la boîte de vitesses.

Selon un mode de réalisation, lesdits moyens de détection sont adaptés pour détecter une situation d'urgence lorsque la vitesse angulaire de rotation du volant est supérieure à un seuil maximum de vitesse de rotation angulaire du volant, et/ou la position de la pédale de freinage est supérieure à un seuil maximum de position de la pédale de freinage, et/ou la position de la pédale d'accélération est supérieure à un seuil maximum de position de la pédale d'accélération.

Dans un mode de réalisation, lesdits moyens d'activation et désactivation sont adaptés pour désactiver le dispositif anti-roulis lorsque les conditions d'activation du dispositif anti-roulis ne sont pas remplies, et que la vitesse longitudinale du véhicule est inférieure à un seuil de vitesse minimum ou qu'une pluralité de conditions sont réalisées, ladite pluralité de conditions comprenant l'accélération latérale du véhicule inférieure à un seuil d'accélération latérale et la vitesse angulaire de rotation du volant inférieure à un seuil minimum de vitesse angulaire de rotation du volant.

Dans un mode de réalisation, la condition d'accélération latérale du véhicule inférieure à un seuil d'accélération latérale est déterminée par comparaison d'une accélération latérale mesurée avec seuil d'accélération latérale mesuré et/ou d'une accélération latérale calculée avec un seuil d'accélération latéral calculée.

Selon un mode de réalisation, ladite pluralité de conditions comprend, en outre, la fin de l'écoulement d'une durée de temporisation de déconnexion précédemment déclenché en fonction de données mémorisées durant un intervalle de temps précédent.

Dans un mode de réalisation, au moins un desdits seuils dépend de la vitesse longitudinale du véhicule.

Dans un autre mode de réalisation de l'invention, il est également proposé un procédé de commande d'un dispositif anti-roulis pour véhicule automobile dans lequel on commande l'activation et la désactivation du dispositif anti-roulis en fonction de paramètres de fonctionnement du véhicule comprenant la vitesse longitudinale du véhicule, l'accélération latérale du véhicule, la position angulaire du volant, et la vitesse angulaire de rotation du volant.

L'invention permet un accroissement de la sensation de sécurité, du confort et du plaisir de conduite.

La présente invention sera mieux comprise à l'étude de la description détaillée de quelques modes de réalisation pris à titre d'exemple nullement limitatif et illustrés par les dessins annexés, sur lesquels :

- la figure 1 est une vue schématique d'un véhicule équipé d'un système de commande selon un aspect de l'invention ; et
- la figure 2 est un schéma logique du système de la figure 1 selon un aspect de l'invention.

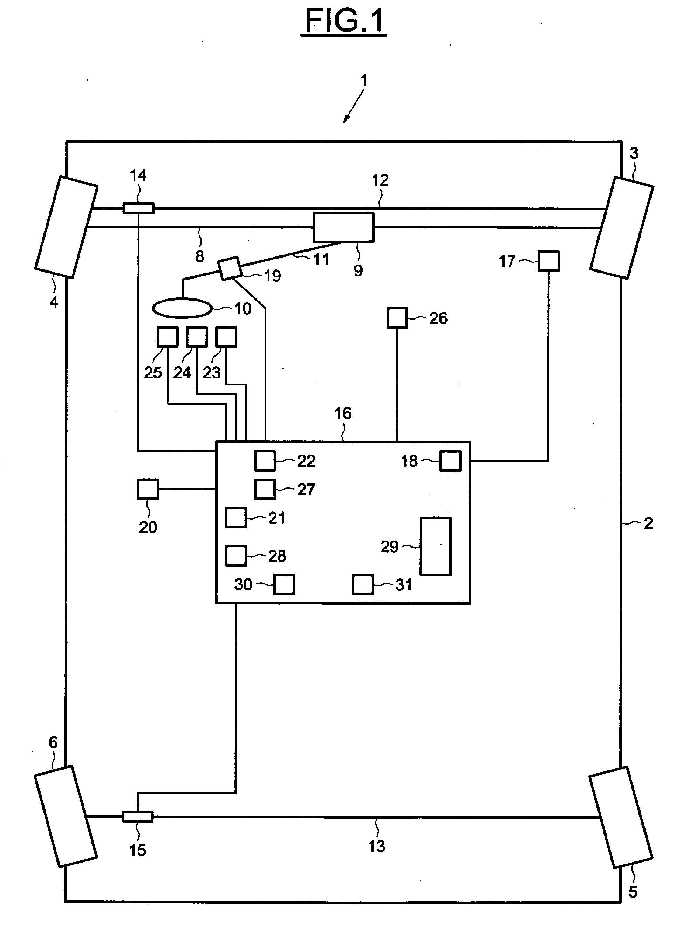

Comme on peut le voir sur la figure 1, le véhicule 1 comprend un châssis 2, deux roues avant directrices 3 et 4, et deux roues arrière 5 et 6, les roues étant reliées au châssis 2 par un mécanisme de suspension non représenté.

Le véhicule 1 se complète par un système de direction 7 comprenant une crémaillère 8 disposée entre les roues avant 3 et 4, un actionneur de crémaillère 9 apte à orienter les roues avant 3 et 4, par l'intermédiaire de la crémaillère 8, en fonction d'ordres reçus, de façon mécanique ou électrique, en provenance d'un volant de direction 10 disposé à une extrémité d'une colonne de direction 11 reliée à l'actionneur de crémaillère 9 en son autre extrémité.

Le véhicule 1 est équipé d'un dispositif d'anti-roulis, comprenant, sur cet exemple, deux barres anti-roulis 12 et 13 reliant respectivement les roues avant 3 et 4 et les roues arrière 5 et 6. Le dispositif d'anti-roulis comprend au moins un actionneur, tel que représenté ici, deux actionneurs 14 et 15, respectivement associés aux barres anti-roulis avant 12 et arrière 13 capables d'agir sur lesdites barres anti-roulis 12 et 13 pour former des barres anti-roulis semi-actives, à réception d'ordre de commande provenant d'une unité de commande électronique 16 embarquée à bord du véhicule 1. Les actionneurs 14 et 15 sont capables, par exemple, de modifier la raideur des barres anti-roulis 12 et 13 en fonction de la consigne reçue de l'unité de commande électronique 16.

Bien entendu, en variante, l'invention s'applique également à tout autre dispositif d'anti-roulis équipant un véhicule automobile.

Le système de commande comprend un capteur 17 de la vitesse de rotation des roues, par exemple avant, permettant, par l'intermédiaire d'un module de détermination 18, de déterminer la vitesse longitudinale V du véhicule 1, ainsi qu'un capteur 19 de mesure de la position angulaire $\alpha$ du volant 10. Le système de commande du dispositif d'anti-roulis comprend, en outre, un capteur 20 de mesure de l'accélération latérale $\gamma_{t\_mes}$ du véhicule 1. En outre, l'unité de commande électronique 16 est munie d'un module de calcul 21 de l'accélération latérale $\gamma_{t\_calc}$ du véhicule, et d'un module de calcul 22 de la vitesse angulaire $\dfrac{d\alpha}{dt}$ de rotation du volant 10.

Bien entendu, en variante, seul l'un des deux éléments 20 ou 21 peut être intégré au système de commande du dispositif anti-roulis.

L'unité de commande électronique 16 peut être réalisée sous la forme d'un microprocesseur équipé d'une mémoire vive, d'une mémoire morte, d'une unité centrale, et d'interfaces d'entrée/sortie permettant de recevoir des informations des capteurs ou estimateurs, et d'envoyer des instructions, notamment aux actionneurs tels que les actionneurs 14 et 15 des barres d'anti-roulis 12 et 13.

En outre, le système de commande du dispositif d'anti-roulis est équipé d'un capteur de position 23 de la pédale de freinage, d'un capteur de position 24 de la pédale d'accélération, d'un capteur de position 25 de la pédale d'embrayage, et d'un capteur 26 fournissant le rapport de démultiplication engagé de la boîte de vitesses.

L'unité de commande électronique 16 est également pourvue d'un module de calcul anticipé 27 de la position angulaire du volant 10.

En outre, l'unité de commande électronique 16 comprend un module de détection 28 d'une situation d'urgence dans laquelle se trouve le conducteur du véhicule 1.

L'unité de commande électronique 16 comprend également un module de mémorisation 29, un module de comparaison 30 capable de comparer la valeur de certains paramètres de fonctionnement du véhicule avec des valeurs prédéterminées, et un module de gestion du temps 31 capable notamment de déterminer le début et la fin d'intervalles de temps, par exemple durant lesquels sont mémorisés la valeurs prises par différents paramètres de fonctionnement du véhicule.

Le module de calcul anticipé 27 de la position angulaire $\alpha_{est}(t)$ de rotation du volant 10 est fait au moyen de la relation suivante :

$$\alpha_{est}(t) = \alpha(t + \Delta t) = \alpha(t) + K \times \frac{d\alpha(t)}{dt}$$

dans laquelle :

$\alpha(t+\Delta t)$ est la valeur de la position angulaire du volant à l'instant $t+\Delta t$, en radians,
$\alpha(t)$ est la valeur de la position angulaire du volant à l'instant t, en radians,
$\alpha_{est}(t)$ est la valeur estimée de la position angulaire du volant à l'instant $t+\Delta t$, calculée à l'instant t, en radians;
K est un gain prédéterminé, en secondes; et

$\frac{d\alpha(t)}{dt}$ est la vitesse angulaire de rotation du volant, calculée à l'instant t, en radians/seçonde..

La vitesse angulaire de rotation du volant peut ainsi être utilisée pour identifier le type de parcours, le type de conduite, ou la présence d'une situation d'évitement, dans lesquels la vitesse angulaire de rotation du volant est supérieure à un seuil maximum de vitesse angulaire de rotation du volant, et/ou la position de la pédale de freinage est supérieure à une position maximale de la pédale de freinage, et/ou la position de la pédale d'accélération est supérieure à une position maximale de la pédale d'accélération, et/ou du rapport de démultiplication engagé de la boîte de vitesses.

Les différents seuils utilisés par l'unité de commande électronique 16 pour commander l'activation ou la désactivation du dispositif d'anti-roulis peuvent dépendre de la vitesse longitudinale du véhicule 1.

L'invention permet d'activer le dispositif d'anti-roulis avant la mise en roulis excessive du véhicule afin d'assurer la stabilité, le maintien et la vivacité de roulis, et de désactiver le système d'anti-roulis lorsque le niveau de roulis est inférieur à un seuil, de manière à améliorer la motricité et la maniabilité du véhicule ainsi que le confort des passagers.

En outre, la désactivation du système d'anti-roulis peut être immédiate ou temporisée. La temporisation peut être dépendante de la vitesse longitudinale V du véhicule 1. Elle peut également tenir compte de l'historique du roulage ou, en d'autres termes, de données mémorisées durant un intervalle de temps précédent, pour identifier des types de conduite particuliers, ou des parcours particuliers, tels des routes de montagne. Ces données mémorisées dans le module de mémorisation 29, en utilisant parallèlement le module de gestion du temps 31, permettent à l'unité de commande électronique 16 de calculer un coefficient pondérateur β, compris entre 0 et 1, de la temporisation de déconnection maximale Tempo_max du dispositif d'anti-roulis. Ainsi, la temporisation réelle est égale à β*Tempo_max. Ce coefficient pondérateur β peut donc refléter le type de parcours, tel un parcours sur autoroute ou route de montagne, ainsi que le type de conduite lié au sollicitations du conducteur sur la colonne de direction 11, la pédale de freinage et la pédale d'accélération.

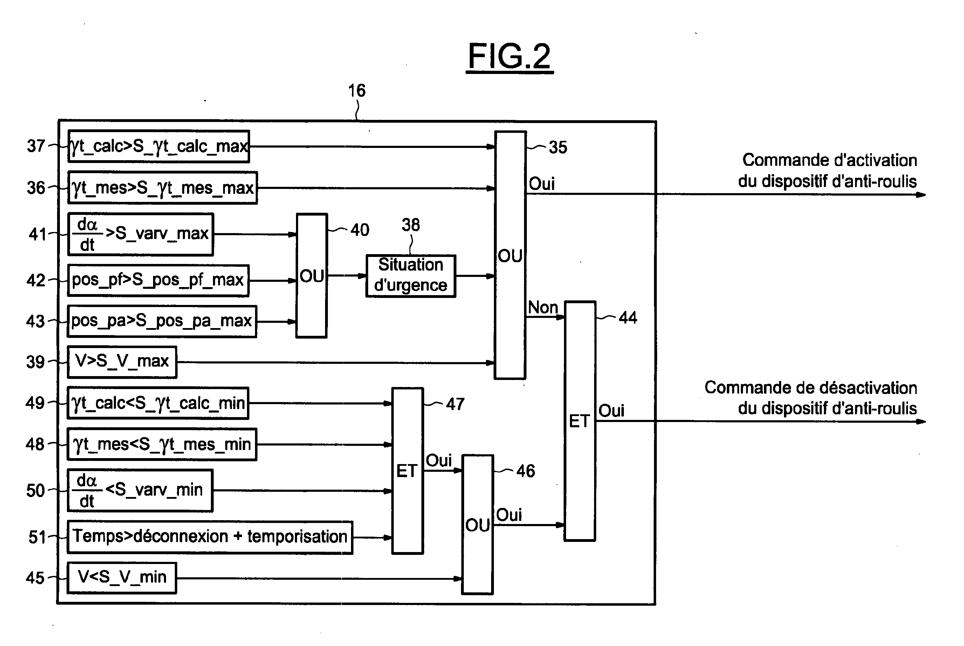

La figure 2 illustre le fonctionnement d'un système de commande d'un dispositif d'anti-roulis de la figure 1.

L'unité de commande électronique 16 effectue un test 35 pour détecter si l'accélération latérale mesurée $\gamma_{t\text{-mes}}$ est supérieure à un seuil du maximum d'accélération latérale mesurée $S\_\gamma_{t\_mes\_max}$ (condition 36), ou si une accélération latérale calculée $\gamma_{t\_calc}$ du véhicule 1 est supérieure à un seuil maximum d'accélération latérale calculée $S\_\gamma_{t\_calc\_max}$ (condition 37), ou si une situation d'urgence (condition 38), ou si la vitesse longitudinale V du véhicule 1 est supérieure à un seuil maximum de vitesse $S\_V_{-max}$ (condition 39).

L'unité de commande électronique 16 détecte une situation d'urgence du véhicule 1 par un test 39 testant si

la vitesse angulaire $\dfrac{d\alpha}{dt}$ de rotation du volant 10 est supérieure à un seuil maximum de vitesse angulaire de rotation du volant S $_{\_varv\_max}$, ou si la position de la pédale de freinage pos_pf est supérieure à un seuil maximum de position de la pédale de freinage S $_{\_pos\_pf\_max}$, ou si la position de la pédale d'accélération est supérieure à une seuil maximum de position de la pédale d'accélération S $_{\_pos\_pa\_max}$.

Lorsqu'une des conditions 36, 37, 38 ou 39 est réalisée, et détectée lors du test 35, l'unité de commande électronique 16 commande l'activation du dispositif d'anti-roulis par le biais des actionneurs 14 et 15.

Si aucune de ces conditions 36, 37, 38 ou 39 n'est réalisée, l'unité de commande électronique 16 teste également (test 44) si la vitesse longitudinale V du véhicule 1 est inférieure à un seuil de vitesse minimum S_V $_{\_min}$ (condition 45) ou bien (test 46) si une pluralité de conditions sont réalisées (test 47).

Le test 47 consiste à vérifier la réalisation d'un ensemble de conditions comprenant l'accélération latérale mesurée $\gamma_{t\_mes}$ inférieure à un seuil minimum d'accélération latérale mesurée S_$\gamma_{t-mes\_min}$ (condition 48), si l'accélération latérale calculée $\gamma_{t\_calc}$ est inférieure à un seuil minimum d'accélération latérale calculée S_$\gamma_{t\_calc\_min}$ (étape 49), si la vitesse angulaire $\dfrac{d\alpha}{dt}$ de rotation du volant 10 est inférieure à un seuil minimum de vitesse angulaire de rotation du volant S $_{\_varv\_min}$ (condition 50) et si l'instant présent Temps dépasse un instant théorique de désactivation du dispositif d'anti-roulis augmenté de la temporisation ou durée additionnelle β*Tempo_max optionnelle en fonction du type de roulage (condition 51). Ainsi lorsque le test 44 est réalisé, l'unité de commande électronique 16 commande la désactivation du dispositif d'anti-roulis par l'intermédiaire des actionneurs 14 et 15.

L'invention offre une loi de commande qui pilote le dispositif anti-roulis semi actif de manière à fournir une sensation de sécurité et un confort de conduite améliorés.

L'invention permet d'adopter le comportement le plus stable possible quelque soient les sollicitations du conducteur et l'état de la chaussée, et offre une sécurité très élevée, et un confort de conduite amélioré.

## Revendications

1.  Système de commande d'un dispositif anti-roulis (12, 13) pour véhicule automobile (1), comprenant des moyens d'activation et désactivation (16) du dispositif anti-roulis en fonction de paramètres de fonctionnement du véhicule (1) comprenant la vitesse longitudinale (V) du véhicule (1), l'accélération latérale ($\gamma_{t\_mes}$, $\gamma_{t\_calc}$) du véhicule (1), la position angulaire ($\alpha$) du volant (10), et la vitesse angulaire ($\dfrac{d\alpha}{dt}$) de rotation du volant (10), **caractérisé en ce que** lesdits paramètres de fonctionnement du véhicule (1) comprennent , en outre, une estimation anticipée ($\alpha_{est}$) de la position angulaire du volant (10), élaborée par des moyens de calcul (27), à partir de la position angulaire ($\alpha$) du volant (10) et de la vitesse angulaire ($\dfrac{d\alpha}{dt}$) de rotation du volant (10).

2.  Système selon la revendication 1, dans lequel lesdits paramètres de fonctionnement du véhicule (1) comprennent, en outre, la position de la pédale de freinage (pos_pf), et/ou la position de la pédale d'accélération (pos_pa), et/ou la position de la pédale d'embrayage, et/ou le rapport de démultiplication engagé de la boîte de vitesses.

3.  Système selon l'une des revendications précédentes, comprenant des moyens de mesure (20) de l'accélération latérale ($\gamma_{t\_mes}$) du véhicule (1), et dans lequel lesdits moyens d'activation et désactivation (16) sont adaptés pour activer ledit dispositif anti-roulis lorsque l'accélération latérale mesurée ($\gamma_{t\_mes}$) du véhicule est supérieure à un seuil maximum d'accélération latérale mesurée (S_$\gamma_{t\_mes\_max}$).

4.  Système selon l'une des revendications précédentes, dans lequel, le système comprenant des moyens de calcul (21) de l'accélération latérale ($\gamma_{t\_calc}$) du véhicule (1), lesdits moyens d'activation et désactivation (16) sont adaptés pour activer le dispositif anti-roulis lorsque l'accélération latérale calculée ($\gamma_{t\_calc}$) du véhicule est supérieure à un seuil maximum d'accélération latérale calculée (S_$\gamma_{t\_calc\_max}$).

5.  Système selon l'une des revendications précédentes, dans lequel lesdits moyens d'activation et désactivation (16) sont adaptés pour activer le dispositif anti-roulis lorsque la vitesse longitudinale (V) du véhicule (1) est supérieure à un seuil maximum de vitesse (S_V$_{max}$).

**6.** Système selon l'une des revendications précédentes, dans lequel lesdits moyens d'activation et désactivation (16) sont adaptés pour activer le dispositif anti-roulis lorsqu'une situation d'urgence (38) est détectée par des moyens de détection (28) en fonction de paramètres de fonctionnement du véhicule (1) comprenant la vitesse angulaire ($\frac{d\alpha}{dt}$) de rotation du volant (10), et/ou la position (pos_pf) de la pédale de freinage, et/ou la position de la pédale d'accélération (pos_pa), et/ou le rapport de démultiplication engagé de la boîte de vitesses.

**7.** Système selon la revendication 6, dans lequel lesdits moyens de détection (28) sont adaptés pour détecter une situation d'urgence lorsque la vitesse angulaire ($\frac{d\alpha}{dt}$) de rotation du volant (10) est supérieure à un seuil maximum de vitesse de rotation angulaire (S$_{varv-max}$) du volant (10), et/ou la position de la pédale de freinage (pos_pf) est supérieure à un seuil maximum de position de la pédale de freinage (S$_{-pos\_pf-max}$), et/ou la position de la pédale d'accélération (pos_pa) est supérieure à un seuil maximum de position de la pédale d'accélération (S$_{-pos\_pa\_max}$).

**8.** Système selon l'une des revendications précédentes, dans lequel lesdits moyens d'activation et désactivation (16) sont adaptés pour désactiver le dispositif anti-roulis (12, 13) lorsque les conditions d'activation du dispositif anti-roulis ne sont pas remplies, et que la vitesse longitudinale (V) du véhicule (1) est inférieure à un seuil de vitesse minimum (S_V$_{min}$) ou qu'une pluralité de conditions sont réalisées, ladite pluralité de conditions comprenant l'accélération latérale du véhicule (1) inférieure à un seuil minimum d'accélération latérale et la vitesse angulaire ($\frac{d\alpha}{dt}$) de rotation du volant (1) inférieure à un seuil minimum de vitesse angulaire de rotation du volant (S_varv_min).

**9.** Système selon la revendication 8, dans lequel la condition d'accélération latérale du véhicule inférieure à un seuil minimum d'accélération latérale est déterminé par comparaison d'une accélération latérale mesurée ($\gamma_{t\_mes}$) avec un seuil minimum d'accélération latérale mesurée (S_$\gamma_{t\_mes\_max}$), et/ou d'une accélération latérale calculée ($\gamma_{t\_calc}$) avec un seuil minimum d'accélération latérale calculée (S_$\gamma_{t\_calc\_max}$).

**10.** Système selon la revendication 8 ou 9, dans lequel ladite pluralité de conditions comprend, en outre, la fin de l'écoulement d'une durée de temporisation ($\beta$*Tempo_max) de déconnexion précédemment déclenchée en fonction de données mémorisées durant un intervalle de temps précédent.

**11.** Système selon l'une des revendications 3 à 10, dans lequel au moins un desdits seuils dépend de la vitesse longitudinale (V) du véhicule (1).

**12.** Procédé de commande d'un dispositif anti-roulis (12, 13) de véhicule automobile (1), dans lequel on commande l'activation et la désactivation du dispositif anti-roulis en fonction de paramètres de fonctionnement du véhicule (1) comprenant la vitesse longitudinale (V) du véhicule (1), l'accélération latérale du véhicule (1), la position angulaire ($\alpha$) du volant (10), et la vitesse angulaire ($\frac{d\alpha}{dt}$) de rotation du volant (10), **caractérisé en ce que** lesdits paramètres de fonctionnement du véhicule (1) comprennent, en outre, une estimation anticipée ($\alpha_{est}$) de la position angulaire du volant (10), élaborée par des moyens de calcul (27), à partir de la position angulaire ($\alpha$) du volant (10) et de la vitesse angulaire ($\frac{d\alpha}{dt}$) de rotation du volant (10).

**Claims**

**1.** System for controlling an anti-roll device (12, 13) for a motor vehicle (1), comprising means (16) for activating and deactivating the anti-roll device depending on parameters of operation of the vehicle (1) comprising the longitudinal speed (V) of the vehicle (1), the lateral acceleration ($\gamma_{t\_mes}$, $\gamma_{t\_calc}$) of the vehicle (1), the angular position ($\alpha$) of the

steering wheel (10), and the angular speed ($\frac{d\alpha}{dt}$) of rotation of the steering wheel (10), **characterized in that** the said parameters of operation of the vehicle (1) also comprise an anticipated estimate ($\alpha_{est}$) of the angular position of the steering wheel (10) generated by computing means (27) based on the angular position ($\alpha$) of the steering wheel (10) and on the angular speed ($\frac{d\alpha}{dt}$) of rotation of the steering wheel (10).

2. System according to Claim 1, in which the said parameters of operation of the vehicle (1) also comprise the position of the brake pedal (pos_pf) and/or the position of the accelerator pedal (pos_pa) and/or the position of the clutch pedal, and/or the engaged gear ratio of the gearbox.

3. System according to one of the preceding claims, comprising means (20) for measuring the lateral acceleration ($\gamma_{t\_mes}$) of the vehicle (1), and in which the said activation and deactivation means (16) are suitable for activating the said anti-roll device when the measured lateral acceleration ($\gamma_{t\_mes}$) of the vehicle is greater than a maximum threshold of measured lateral acceleration ($S\_\gamma_{t\_mes\_max}$).

4. System according to one of the preceding claims, in which, the system comprising means (21) for computing the lateral acceleration ($\gamma_{t\_calc}$) of the vehicle (1), the said activation and deactivation means (16) are suitable for activating the anti-roll device when the computed lateral acceleration ($\gamma_{t\_calc}$) of the vehicle is greater than a maximum threshold of computed lateral acceleration ($S\_\gamma_{t\_calc\_max}$).

5. System according to one of the preceding claims, in which the said activation and deactivation means (16) are suitable for activating the anti-roll device when the longitudinal speed (V) of the vehicle (1) is greater than a maximum threshold of speed ($S\_V\_{max}$).

6. System according to one of the preceding claims, in which the said activation and deactivation means (16) are suitable for activating the anti-roll device when an emergency situation (38) is detected by detection means (28) depending on parameters of operation of the vehicle (1) comprising the angular speed ($\frac{d\alpha}{dt}$) of rotation of the steering wheel (10), and/or the position (pos_pf) of the brake pedal, and/or the position of the accelerator pedal (pos_pa), and/or the engaged gear ratio of the gearbox.

7. System according to Claim 6, in which the said detection means (28) are suitable for detecting an emergency situation when the angular speed ($\frac{d\alpha}{dt}$) of rotation of the steering wheel (10) is greater than a maximum threshold of speed of angular rotation ($S\_{varv\_max}$) of the steering wheel (10), and/or the position of the brake pedal (pos_pf) is greater than a maximum threshold of position of the brake pedal ($S\_{pos\_pf\_max}$), and/or the position of the accelerator pedal (pos_pa) is greater than a maximum threshold of position of the accelerator pedal ($S\_{pos\_pa\_max}$).

8. System according to one of the preceding claims, in which the said activation and deactivation means (16) are suitable for deactivating the anti-roll device (12, 13) when the conditions of activation of the anti-roll device are not fulfilled, and the longitudinal speed (V) of the vehicle (1) is less than a threshold of minimum speed ($S\_V\_{mim}$) or a plurality of conditions are reached, the said plurality of conditions comprising the lateral acceleration of the vehicle (1) below a minimum threshold of lateral acceleration and the angular speed ($\frac{d\alpha}{dt}$) of rotation of the steering wheel (1) below a minimum threshold of angular speed of rotation of the steering wheel ($S\_{vary-min}$).

9. System according to Claim 8, in which the condition of lateral acceleration of the vehicle below a minimum threshold of lateral acceleration is determined by comparison of a measured lateral acceleration ($\gamma_{t\_mes}$) with a minimum threshold of measured lateral acceleration ($S\_\gamma_{t\_mes\_max}$), and/or of a computed lateral acceleration ($\gamma_{t\_calc}$) with a minimum threshold of computed lateral acceleration ($S\_\gamma_{t\_calc\_max}$).

10. System according to Claim 8 or 9, in which the said plurality of conditions also comprises the end of a lapse of a time delay period (β*Tempo_max) of disconnection previously initiated as a function of data stored during a previous time interval.

11. System according to one of Claims 3 to 10, in which at least one of the said thresholds depends on the longitudinal speed (V) of the vehicle (1).

12. Method for controlling an anti-roll device (12, 13) of a motor vehicle (1), in which the activation and deactivation of the anti-roll device is controlled depending on parameters of operation of the vehicle (1) comprising the longitudinal speed (V) of the vehicle (1), the lateral acceleration of the vehicle (1), the angular position (α) of the steering wheel (10), and the angular speed ($\frac{d\alpha}{dt}$) of rotation of the steering wheel (10), **characterized in that** the said parameters of operation of the vehicle (1) also comprise an anticipated estimate ($\alpha_{est}$) of the angular position of the steering wheel (10), generated by computing means (27), based on the angular position (α) of the steering wheel (10) and of the angular speed ($\frac{d\alpha}{dt}$) of rotation of the steering wheel (10).

**Patentansprüche**

1. System zur Steuerung einer Stabilisatorvorrichtung (12, 13) für ein Kraftfahrzeug (1), das Einrichtungen zur Aktivierung und Deaktivierung (16) der Stabilisatorvorrichtung in Abhängigkeit von Betriebsparametern des Fahrzeugs (1) enthält, die die Längsgeschwindigkeit (V) des Fahrzeugs (1), die Seitenbeschleunigung ($\gamma_{t\_mes}$, $\gamma_{t\_calc}$) des Fahrzeugs (1), die Winkelstellung (α) des Lenkrads (10) und die Drehwinkelgeschwindigkeit ($\frac{d\alpha}{dt}$) des Lenkrads (10) enthalten, **dadurch gekennzeichnet, dass** die Betriebsparameter des Fahrzeugs (1) außerdem eine Vorausschätzung ($\alpha_{est}$) der Winkelstellung des Lenkrads (10) enthalten, die von Recheneinrichtungen (27) ausgehend von der Winkelstellung (α) des Lenkrads (10) und von der Drehwinkelgeschwindigkeit ($\frac{d\alpha}{dt}$) des Lenkrads (10) erarbeitet wird.

2. System nach Anspruch 1, bei dem die Betriebsparameter des Fahrzeugs (1) außerdem die Stellung des Bremspedals (pos_pf) und/oder die Stellung des Gaspedals (pos_pa) und/oder die Stellung des Kupplungspedals und/oder die eingelegte Gangübersetzung des Getriebes enthalten.

3. System nach einem der vorhergehenden Ansprüche, das Messeinrichtungen (20) der Seitenbeschleunigung ($\gamma_{t\_mes}$) des Fahrzeugs (1) enthält, und bei dem die Aktivierungs- und Deaktivierungseinrichtungen (16) geeignet sind, um die Stabilisatorvorrichtung zu aktivieren, wenn die gemessene Seitenbeschleunigung ($\gamma_{t\_mes}$) des Fahrzeugs höher als ein maximaler Schwellwert einer gemessenen Seitenbeschleunigung ($S\_\gamma_{t\_mes\_max}$) ist.

4. System nach einem der vorhergehenden Ansprüche, bei dem, wenn das System Einrichtungen (21) zur Berechnung der Seitenbeschleunigung ($\gamma_{t\_calc}$) des Fahrzeug (1) enthält, die Aktivierungs- und Deaktivierungseinrichtungen (16) geeignet sind, um die Stabilisatorvorrichtung zu aktivieren, wenn die berechnete Seitenbeschleunigung ($\gamma_{t\_calc}$) des Fahrzeugs höher als ein maximaler Schwellwert einer berechneten Seitenbeschleunigung ($S\_\gamma_{t\_calc\_max}$) ist.

5. System nach einem der vorhergehenden Ansprüche, bei dem die Aktivierungs- und Deaktivierungseinrichtungen (16) geeignet sind, um die Stabilisatorvorrichtung zu aktivieren, wenn die Längsgeschwindigkeit (V) des Fahrzeugs (1) höher als ein maximaler Geschwindigkeitsschwellwert ($S\_V\_{max}$) ist.

6. System nach einem der vorhergehenden Ansprüche, bei dem die Aktivierungs- und Deaktivierungseinrichtungen (16) geeignet sind, um die Stabilisatorvorrichtung zu aktivieren, wenn eine Notsituation (38) von Erfassungseinrichtungen (28) in Abhängigkeit von Betriebsparametern des Fahrzeugs (1) erfasst wird, die die Drehwinkelgeschwindigkeit ($\frac{d\alpha}{dt}$) des Lenkrads (10) und/oder die Stellung (pos_pf) des Bremspedals und/oder die Stellung des Gaspedals (pos_pa) und/oder die eingelegte Gangübersetzung des Getriebes enthalten.

7. System nach Anspruch 6, bei dem die Erfassungseinrichtungen (28) geeignet sind, um eine Notsituation zu erfassen, wenn die Drehwinkelgeschwindigkeit ($\frac{d\alpha}{dt}$) des Lenkrads (10) höher als ein maximaler Winkeldrehgeschwindigkeitsschwellwert (S_varv_max) des Lenkrads (10) ist, und/oder die Stellung des Bremspedals (pos_pf) höher als ein maximaler Stellungsschwellwert des Bremspedals (S_pos_pf_max) ist, und/oder die Stellung des Gaspedals (pos_pa) höher als ein maximaler Stellungsschwellwert des Gaspedals (S_pos_pa_max) ist.

8. System nach einem der vorhergehenden Ansprüche, bei dem die Aktivierungs- und Deaktivierungseinrichtungen (16) geeignet sind, um die Stabilisatorvorrichtung (12, 13) zu deaktivieren, wenn die Aktivierungsbedingungen der Stabilisatorvorrichtung nicht erfüllt sind, und wenn die Längsgeschwindigkeit (V) des Fahrzeugs (1) unter einem minimalen Geschwindigkeitsschwellwert (S_V_min) liegt, oder wenn mehrere Bedingungen erfüllt sind, wobei die mehreren Bedingungen die Seitenbeschleunigung des Fahrzeugs (1) unter einem minimalen Seitenbeschleunigungsschwellwert und die Drehwinkelgeschwindigkeit ($\frac{d\alpha}{dt}$) des Lenkrads (1) unter einem minimalen Drehwinkelgeschwindigkeitsschwellwert des Lenkrads (S_varv_min) enthalten.

9. System nach Anspruch 8, bei dem die Bedingung der Seitenbeschleunigung des Fahrzeugs unter einem minimalen Seitenbeschleunigungsschwellwert durch Vergleich einer gemessenen Seitenbeschleunigung ($\gamma_{t\_mes}$) mit einem minimalen Schwellwert einer gemessenen Seitenbeschleunigung (S_$\gamma_{t\_mes\_max}$) und/oder einer berechneten Seitenbeschleunigung ($\gamma_{t\_calc}$) mit einem minimalen Schwellwert einer berechneten Seitenbeschleunigung (S_$\gamma_{t\_calc\_max}$) bestimmt wird.

10. System nach Anspruch 8 oder 9, bei dem die mehreren Bedingungen außerdem das Ende des Ablaufs einer Verzögerungszeit (β*Tempo_max) des Abschaltens enthalten, die vorher in Abhängigkeit von während eines vorhergehenden Zeitintervalls gespeicherten Daten ausgelöst wird.

11. System nach einem der Ansprüche 3 bis 10, bei dem mindestens einer der Schwellwerte von der Längsgeschwindigkeit (V) des Fahrzeugs (1) abhängt.

12. Verfahren zur Steuerung einer Stabilisatorvorrichtung (12, 13) eines Kraftfahrzeugs (1), bei dem die Aktivierung und die Deaktivierung der Stabilisatorvorrichtung in Abhängigkeit von Betriebsparametern des Fahrzeugs (1) gesteuert werden, die die Längsgeschwindigkeit (V) des Fahrzeugs (1), die Seitenbeschleunigung des Fahrzeugs (1), die Winkelstellung (α) des Lenkrads (10) und die Drehwinkelgeschwindigkeit ($\frac{d\alpha}{dt}$) des Lenkrads (10) enthalten, **dadurch gekennzeichnet, dass** die Betriebsparameter des Fahrzeugs (1) außerdem eine Vorausschätzung ($\alpha_{est}$) der Winkelstellung des Lenkrads (10) enthalten, die von Recheneinrichtungen (27) ausgehend von der Winkelstellung (α) des Lenkrads (10) und der Drehwinkelgeschwindigkeit ($\frac{d\alpha}{dt}$) des Lenkrads (10) erarbeitet wird.

# FIG.1

## FIG.2

37 — $\gamma t\_calc > S\_\gamma t\_calc\_max$

36 — $\gamma t\_mes > S\_\gamma t\_mes\_max$

41 — $\dfrac{d\alpha}{dt} > S\_varv\_max$

42 — $pos\_pf > S\_pos\_pf\_max$

43 — $pos\_pa > S\_pos\_pa\_max$

39 — $V > S\_V\_max$

49 — $\gamma t\_calc < S\_\gamma t\_calc\_min$

48 — $\gamma t\_mes < S\_\gamma t\_mes\_min$

50 — $\dfrac{d\alpha}{dt} < S\_varv\_min$

51 — Temps > déconnexion + temporisation

45 — $V < S\_V\_min$

OU — 40

Situation d'urgence — 38

OU — 35

Oui

Non

ET — 47

ET — 44

Oui

OU — 46

Oui

Oui

Commande d'activation du dispositif d'anti-roulis

Commande de désactivation du dispositif d'anti-roulis

16

EP 2 109 546 B1

## RÉFÉRENCES CITÉES DANS LA DESCRIPTION

### Documents brevets cités dans la description

- GB 2377415 A
- WO 03008215 A
- EP 1022169 A
- EP 1541394 A
- WO 2005120190 A
- US 5630623 A
- EP 2344808 B